# EUROPEAN PATENT APPLICATION

(11) **EP 1 650 415 A1**
(43) Date of publication of application: **26.04.2006**
(21) Application number: 03817656.6
(22) Date of filing: 29.07.2003
(51) Int. Cl.: F02B 37/00, F02B 39/00, F02B 37/02, F02M 25/07

(54) **TURBOCHARGER**

(71) Applicant: Hino Motors, Ltd., Hino-shi, Tokyo 191-8660 (JP); Honeywell Turbocharging Systems Japan Inc., Minato-ku, Tokyo 106-0047 (JP)
(72) Inventor: Shimokawa, Kiyohiro, c/o Hino Motors, Ltd., Hino-shi, Tokyo 191-8660 (JP); Watanabe, Y., Honeywell Turbocharging Syst.Japan, Minato-ku, Tokyo 106-0047 (JP)
(74) Representative: Köhler, Walter
(86) International application number: PCT/JP2003/009588
(87) International publication number: WO 2005/010330

(57) **Abstract**

A turbocharger (2) mounted on an engine (1) has an EGR pipe (11) through which part of exhaust gas (8) is extracted from an exhaust manifold (9) to be recirculated to a suction pipe (4), the exhaust manifold (9) being internally divided by a partition (14) for prevention of exhaust interference between cylinders (7). A turbine scroll (15) is internally divided, for continuity with an outlet flow path of the exhaust manifold (9), by a partition (16) such that one of the divided flow paths (A, B) by the partition (16) which served for extraction of the exhaust gas (8) to be recirculated is smaller in cross-sectional area than the other flow path which does not serve for extraction of the exhaust gas (8) to be recirculated.

## Description

### Technical Field

The present invention relates to a turbocharger.

### Background Art

Conventionally, so-called exhaust gas recirculation (EGR) has been conducted, for example, for an engine of a motor vehicle in which part of exhaust gas is extracted from an exhaust side to be returned to a suction side. The exhaust gas returned to the suction side suppresses combustion of fuel in the engine, thereby lowering combustion temperature to reduce NOₓ generated.

Generally, in order to conduct such kind of exhaust gas recirculation, an appropriate position of an exhaust passage extending from an exhaust manifold to an exhaust pipe is connected through an EGR pipe to an appropriate position of a suction passage extending from a suction pipe to a suction manifold, whereby the exhaust gas is recirculated through the EGR pipe.

The EGR pipe for recirculation of the exhaust gas to the engine may be equipped with, midway thereof, a water-cooled EGR cooler since cooling of the exhaust gas to be recirculated to the engine in a mid part of the EGR pipe will drop the temperature of and reduce the volume of the exhaust gas to lower the combustion temperature without substantial decrease in output of the engine, thereby effectively suppressing generation of nitrogen oxides.

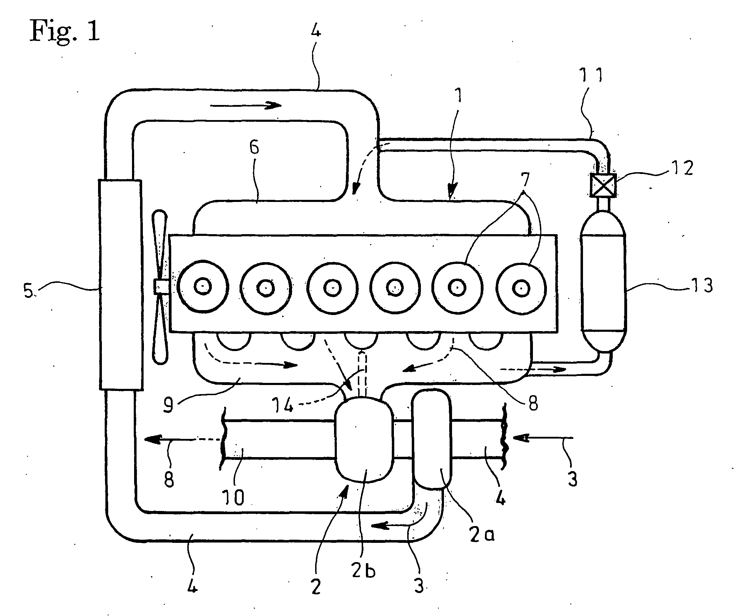

Fig. 1 shows an example of the above-mentioned engine in which the exhaust gas recirculation can be conducted. An engine 1 as shown has a turbocharger 2, and sucked air 3 from an air cleaner (not shown) is passed via a suction pipe 4 to a compressor 2a of the turbocharger 2 where the air 3 is pressurized to be passed to and cooled by an inter cooler 5. The air 3 is further guided from the cooler 5 to a suction manifold 6 and is distributed to cylinders 7 of the engine 1 (Fig. 1 shows a case where the cylinders are in-line six cylinders).

Exhaust gas 8 from the cylinders 7 of the engine 1 is passed via an exhaust manifold 9 to a turbine 2b of the turbocharger 2. The exhaust gas 8 drives the turbine 2b and is discharged outside of the vehicle.

One end of the exhaust manifold 9 in a direction of array of the cylinders 7 is connected via an EGR pipe 11 to an end of the suction pipe 4, which is connected to the suction manifold 6, such that part of the exhaust gas 8 may be extracted from the manifold 9 to the suction pipe 4.

The EGR pipe 11 has an EGR valve 12 for selective opening and closing of the EGR pipe 11 as well as an EGR cooler 13 for cooling of the exhaust gas 8 to be recirculated. The cooler 13 is adapted to lower the temperature of the exhaust gas 8 through heat exchange of cooling water (not shown) with the exhaust gas 8.

In the figure, reference numeral 14 denotes a partition which divides exhaust flow path in the exhaust manifold 9 into that for the front-side three cylinders and that for the rear-side three cylinders. The partition 14 suppresses exhaust interference between the cylinders 7 partly overlapping with each other in exhaust stroke to thereby effectively feed exhaust pulsation to the turbine 2b.

However, in the above-mentioned engine 1 with the turbocharger 2, difference in pressure between the suction and exhaust sides may be decreased because of the suction side being supercharged, disadvantageously resulting in difficulty of attaining higher EGR ratio. Especially in a higher load region, there may be a regional portion where supercharging pressure by the turbocharger 2 is higher than exhaust pressure, so that there exits a possibility that the exhaust gas 8 cannot be recirculated from the exhaust manifold 9 to the suction pipe 4.

It may be envisaged, as a countermeasure against the supercharging pressure higher than the exhaust pressure, that suction is throttled to lower the supercharging pressure. However, excessive suction throttling for example in a higher load region may result in substantial decrease in newly sucked air amount so that not only insufficient combustion in the cylinders and/or deterioration in fuel mileage may be caused but also improvement in engine performance by the turbocharger 2 may fail.

The invention was made in view of the above and has its object to realize higher EGR ratio in an engine with a turbocharger and to satisfy both of NOₓ reduction through recirculation of the exhaust gas and improvement in engine performance through supercharging.

### Summary of The Invention

The invention is directed to a turbocharger mounted on an engine and having an EGR pipe through which part of exhaust gas is extracted from an exhaust manifold to be recirculated to a suction pipe, the exhaust manifold being internally divided by a partition for prevention of exhaust interference between cylinders,
characterized in that a turbine scroll is internally divided, for continuity with outlet flow paths of the exhaust manifold, by a partition such that one of the divided flow paths by the partition which serves for extraction of the exhaust gas to be recirculated is smaller in flow-path cross-sectional area than the other flow path which does not serve for extraction of the exhaust gas to be recirculated.
Thus, the one of the flow paths in the turbine scroll of the turbocharger which serves for extraction of the exhaust gas to be recirculated has back pressure higher than that of the other flow path which does not serve for extraction of the exhaust gas to be recirculated, so that enough pressure difference is ensured between the suction and discharge sides even if the suction side is supercharged, thereby realizing EGR ratio higher than that attained hitherto.
The fact that EGR can be conducted more effectively will broaden tuning possibility, so that sucked air amount which has been needed to be throttled for EGR hitherto may be increased, thereby averting insufficient combustion in the cylinders and deterioration of fuel mileage and attaining improvement in engine performance through the turbocharger.
In the invention, preferably, tongues are respectively provided at two circumferential positions of the turbine scroll, an exhaust inflow range from the tongue near the exhaust inflow port to the tongue away from the exhaust inflow port being adapted to be a throat portion only for one of the flow paths, the remaining exhaust inflow range from the tongue away from the inflow port back to the tongue near the inflow port being adapted to be a throat portion only for the other flow path.

Thus, the throat of the turbine scroll is circumferentially divided, and to such divided throat portions the flow paths are respectively and separately opened. There is no need of forcedly partitioning the narrow throat space by a partition, and the exhaust gases flowing through the respective flow paths can be passed to the turbine wheel while they are maintained separate to the last, whereby the exhaust-interference reducing effect can be maintained at a higher level.

When a great number of angularly adjustable nozzle vanes are employed and arranged in the throat of the turbine scroll, then appropriately and associatively usable is a technique of angularly adjusting the respective nozzle vanes to lower substantial efficiency of the turbocharger to thereby lower the supercharging pressure. As a result, further high EGR ratio can be realized for the engine with the turbocharger.

### Brief Description of Drawings

Fig. 1 is a schematic view showing an example of an engine to which exhaust gas is to be recirculated;
Fig. 2 is a sectional view showing an embodiment of the invention;
Fig. 3 is a sectional view looking in the direction of arrows III in Fig. 2;
Fig. 4 is a sectional view looking in the direction of arrows IV in Fig. 2;
Fig. 5 is a sectional view looking in the direction of arrows V in Fig. 2; and
Fig. 6 is a schematic view showing an embodiment of an angle adjustment mechanism for nozzle vanes shown in Fig. 2.

### Best Mode for Carrying Out the Invention

An embodiment of the invention will be described in conjunction with the drawings.

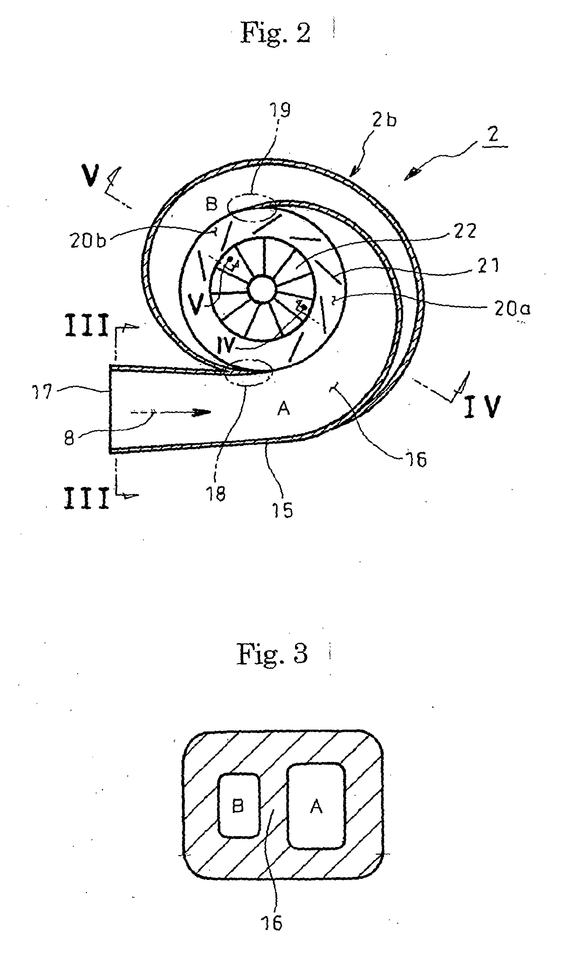

Figs. 2-5 show the embodiment of the invention directed to the turbocharger 2 mounted on the engine 1 referred to in the above with respect to Fig. 1. More specifically, it is the turbocharger mounted on the engine 1 and having an EGR pipe 11 through which part of exhaust gas 8 from an exhaust manifold 9 is extracted to be recirculated to a suction pipe 4, the exhaust manifold 9 being internally divided by a partition 16 for prevention of exhaust interference between cylinders 7 (see Fig. 1 with respect to the structure of the engine 1).

In the turbocharger 2 shown, a turbine scroll 15 is internally divided by the partition 16 for continuity with outlet flow paths of the exhaust manifold 9. As shown in Fig. 3, one A of the divided flow paths by the partition 16 which does not serve for extraction of the exhaust gas 8 to be recirculated (i.e., that on the side not in communication with the EGR pipe 11) has flow-path cross-sectional area competitive to that hitherto while the other B of the divided flow paths which serves for extraction of the exhaust gas 8 to be recirculated (i.e., that on the side in communication with the EGR pipe 11) has flow-path cross-sectional area smaller than that hitherto.

Upon formation of such flow path B with flow path with cross-sectional area smaller than that hitherto, preferably, the output flow paths of the exhaust manifold 9 also have flow-path cross-sectional areas with similar difference so as to have moderate continuity between the flow paths.

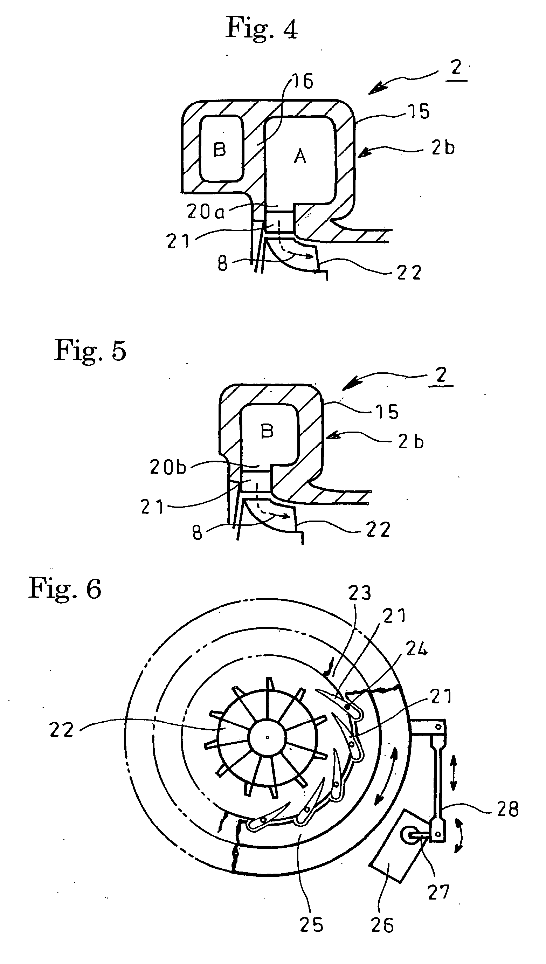

As shown in Figs. 2, 4 and 5, in this turbocharger 2, not only the tongue 18 is formed at a conventional position near the exhaust inflow port 17, but also a tongue 19 is formed at a position diametrically opposite to that of the tongue 18. An exhaust inflow range from the tongue 18 near the exhaust inflow port 17 to the tongue 19 away from the port provides a throat portion 20a only for the flow path A with greater flow-path cross-sectional area as shown in Fig. 4. The remaining exhaust inflow range from the tongue 19 away from the exhaust inflow port 17 back to the tongue 18 near the port provides a throat portion 20b only for the flow path B with smaller flow-path cross-sectional area as shown in Fig. 5.

That is, in the first-half throat portion 20a in the direction of whirl of the exhaust gas 8, only the flow path A with the greater flow path cross-sectional area is opened and the flow path B with smaller flow-path cross-sectional area merely runs parallel thereto. The flow path A with the greater flow-path cross-sectional area converges at the tongue 19 away from the exhaust inflow port 17. In the second-half throat portion 20b in the direction of whirl of the exhaust gas 8, the flow path B with smaller flow-path cross-sectional area takes the place of the flow path A to be opened and converges at the tongue 18 near the exhaust inflow port 17.

A great number of angularly adjustable nozzle vanes 21 are arranged in the throat portions 20a and 20b of the turbine scroll 15. As shown in Fig. 6 which is schematic representation of an embodiment of an angle adjustment mechanism, the nozzle vanes 21 arranged to encircle the turbine wheel 22 are tiltably mounted on a nozzle ring plate 23 via pins 24, angles of the vanes 21 being changed in conjunction with circumferential relative movement of a link plate 25 to the nozzle ring plate 23. The link plate 25 is adapted to be swung via a link 28 by tilting operation of a lever 27 through an actuator 26.

When the thus constructed turbocharger 2 is employed for the engine 1 as shown in Fig. 1, the one of the flow paths in the turbine scroll 15 of the turbocharger 2 which serves for extraction of the exhaust gas 8 to be recirculated has back pressure higher than that of the other flow path which does not serve for extraction of the exhaust gas 8 to be recirculated, so that enough pressure difference is ensured between the suction and discharge sides even if the suction side is supercharged, thereby realizing EGR ratio higher than that attained hitherto.

The fact that EGR can be conducted more effectively will broaden tuning possibility, so that sucked air amount which has been needed to be throttled for EGR hitherto may be increased, thereby averting insufficient combustion in the cylinders and deterioration of fuel mileage and attaining improvement in engine 1 performance through the turbocharger 2.

In the embodiment shown, the throat of the turbine scroll 15 is circumferentially divided, and to such divided throat portions the flow paths are respectively opened. There is no need of forcedly partitioning the narrow throat space by the partition 16, and the exhaust gases 8 flowing through the respective flow paths can be passed to the turbine wheel while they are maintained separate to the last, whereby the exhaust-interference reducing effect can be maintained at a higher level.

In a case of a system where the throat of the turbine scroll 15 is divided widthwise by the partition 16 and when the great number of angularly adjustable nozzle vanes 21 are arranged in the throat of the turbine scroll 15 as exemplified herein, even if the partition 16 is moved to the very edges of the respective nozzle vanes 21, tilting motion of the respective nozzle vanes 21 inevitably brings about formation of clearances, which causes passing of the exhaust gas 8 mutually between the flow paths to impair the exhaust-interference reducing effect; such disadvantage can be averted by the invention.

When the throat of the turbine scroll 15 is provided with the great number of angularly adjustable nozzle vanes 21 and if the respective nozzle vanes 21 are opened wider than usual, then the whirling velocity of the exhaust gas 8 in the turbine is lowered to decrease the number of revolutions of the turbine so that sucked air amount on the compressor is decreased to lower the efficiency of the turbocharger 2 to thereby lower the supercharging pressure on the compressor. Moreover, against the turbine with reduced number of revolutions, ventilation resistance of the exhaust gas 8 increases to enhance the exhaust pressure upstream of the turbine.

Thus, use in combination with such the great number of angularly adjustable nozzle vanes 21 brings about further high EGR ratio with respect to the engine 1 with the turbocharger 2.

### Industrial Applicability

As mentioned above, a turbocharger of the invention will exert the following excellent effects.
(I) According to the invention as claimed in claim 1, even if suction side is supercharged, enough pressure difference can be ensured between the suction and exhaust sides with no excessive suction throttling. As a result, in the engine with the turbocharger, higher EGR ratio can be realized to obtain good NOₓ reduction effect. Moreover, improvement in turbine performance by the turbocharger can be attained while averting insufficient combustion in the cylinders and deterioration of fuel mileage.
(II) According to the invention as claimed in claim 2, there is no need of forcedly partitioning the narrow throat space by a partition, and the exhaust gases flowing through the respective flow paths can be passed to the turbine wheel while they are maintained separate to the last, whereby the exhaust-interference reducing effect can be maintained at a higher level.
(III) According to the invention as claimed in claim 3, appropriately and associatively usable is a technique of angularly adjusting the respective nozzle vanes to lower substantial efficiency of the turbocharger to thereby lower the supercharging pressure. As a result, further high EGR ratio can be realized for the engine with the turbocharger.

## Claims

1. A turbocharger (2) mounted on an engine (1) and having an EGR pipe (11) through which part of exhaust gas (8) is extracted from an exhaust manifold (9) to be recirculated to a suction pipe (4), the exhaust manifold (9) being internally divided by a partition for prevention of exhaust interference between cylinders (7),
**characterized in that** a turbine scroll (15) is internally divided, for continuity with outlet flow paths of the exhaust manifold (9), by a partition (16) such that one of the divided flow paths A, B by the partition which serves for extraction of the exhaust gas (8) to be recirculated is smaller in flow-path cross-sectional area than the other flow path which does not serve for extraction of the exhaust gas (8) to be recirculated.

2. The turbocharger according to claim 1, **characterized in that** tongues (18, 19) are respectively provided at two circumferential positions of the turbine scroll (15), an exhaust inflow range from the tongue (18) near the exhaust inflow port (17) to the tongue (19) away from the exhaust inflow port providing a throat portion (20a) only for one of the flow paths A, the remaining exhaust inflow range from the tongue (19) away from the exhaust inflow port (17) back to the tongue (18) near the exhaust inflow port (17) providing a throat portion (20b) only for the other flow path B.

3. The turbocharger according to claim 1, **characterized in that** a throat (20a, 20b) of the turbine scroll (15) is provided with a number of angularly adjustable nozzle vanes (21).

4. The turbocharger according to claim 2, **characterized in that** a throat (20a, 20b) of the turbine scroll (15) is provided with a number of angularly adjustable nozzle vanes (21).
